Europäisches Patentamt

European Patent Office

Office européen des brevets

(11) Veröffentlichungsnummer: **0 175 917**
**A2**

# (12) EUROPÄISCHE PATENTANMELDUNG

(21) Anmeldenummer: **85110310.1**

(22) Anmeldetag: **17.08.85**

(51) Int. Cl.⁴: **G 01 L 1/22**
**G 01 L 5/13**

(30) Priorität: **22.09.84 DE 3434843**

(43) Veröffentlichungstag der Anmeldung:
**02.04.86 Patentblatt 86/14**

(84) Benannte Vertragsstaaten:
**DE FR GB IT**

(71) Anmelder: **ROBERT BOSCH GMBH**
**Postfach 50**
**D-7000 Stuttgart 1(DE)**

(72) Erfinder: **Hesse, Horst, Dr. Dipl.-Ing.**
**Auberlenweg 13b**
**D-7000 Stuttgart 1(DE)**

(54) **Kraftmesser.**

(57) Ein Bauelement (17) eines Kraftmessers (18) ist in Augen (13, 14) der Schenkeln (11, 12) eines Schleppergehäuses (10) gelagert. In einer Längsbohrung (21) des Bauelements (17) ist im Bereich der Lagerung eines Unterlenkers (23) eines Pflugs ein elastisch verformbarer, scheibenartiger Träger (22) ortsfest angeordnet. Auf diesem Träger (22) befinden sich in Richtung der Zugkraft des Unterlenkers (23) und unter 90° zu dieser Dehnmeßstreifen (24). Die Durchbiegung des Bauelements (17) und somit die Zugkraft des Unterlenkers (23) des Pflugs wird mit Hilfe der Dehnmeßstreifen (24) auf eine Regeleinrichtung eines Schleppers übertragen. Der Kraftmesser (18) baut einfach und kompakt und eignet sich für besondere Anwendungsfälle.

FIG. 1

R. 19635
14.9.1984 Sf/Pi

ROBERT BOSCH GMBH, 7000 STUTTGART 1

## Kraftmesser

Stand der Technik

Die Erfindung geht aus von einem Kraftmesser nach der Gattung des Hauptanspruchs. Es ist schon ein derartiger Kraftmesser bekannt, bei dem die Dehnmeßstreifen auf einem elastischen Träger angeordnet sind. Dies hat den Nachteil, daß der Träger mit den Dehnmeßstreifen außen am Bauteil befestigt werden muß. Dadurch ist ein zusätzlicher Schutz gegen mechanische Beschädigung sowie gegen Witterungseinflüsse für die Dehnmeßstreifen notwendig. Das Bauvolumen des Kraftmessers wird dadurch vergrößert.

Vorteile der Erfindung

Der erfindungsgemäße Kraftmesser mit den kennzeichnenden Merkmalen des Hauptanspruchs hat demgegenüber den Vorteil, daß er einfach und robust baut. Die Dehnmeßstreifen sind gegenüber den Beanspruchungen des rauhen landwirtschaftlichen Einsatzes geschützt und auch leicht austauschbar. Die Eingangswerte der zu messenden mechanischen Spannungen

...

sind relativ groß, wodurch die Empfindlichkeit des Kraftmessers relativ groß ist. Die Dehnmeßstreifen sind einfach und kostengünstig im Kraftmesser einbaubar. Die Bauteile des Ackerschleppers brauchen nicht wesentlich verändert zu werden. Die Festigkeit des Kraftmessers wird
nicht wesentlich geschwächt, sie ist relativ hoch, und
der Kraftmesser hat eine lange Lebensdauer. Das Gewicht
des Kraftmessers ist geringer gegenüber einem mit außen
angeordneten Dehnmeßstreifen.

Durch die in den Unteransprüchen aufgeführten Maßnahmen
sind vorteilhafte Weiterbildungen und Verbesserungen der
im Hauptanspruch angegebenen Merkmale möglich.

Zeichnung

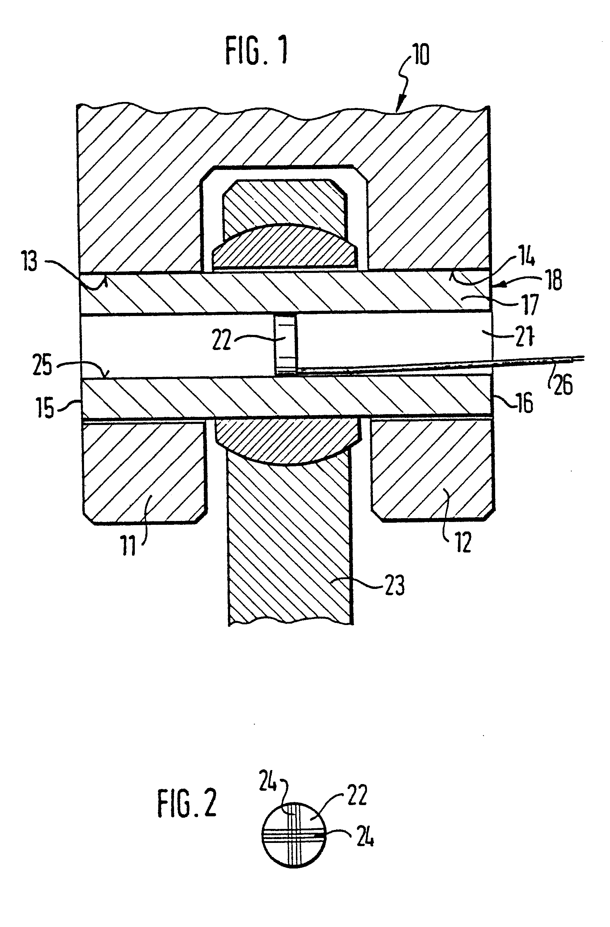

Ein Ausführungsbeispiel der Erfindung ist in der Zeichnung dargestellt und in der nachfolgenden Beschreibung
näher erläutert. Es zeigen Figur 1 einen Längsschnitt
durch einen Kraftmesser und Figur 2 eine Einzelheit.

Beschreibung des Ausführungsbeispiels

An einem nicht näher dargestellten mehrteiligen Schleppergehäuse 10 sind zwei Schenkel 11, 12 ausgebildet, die je
ein Auge 13, 14 aufweisen. In den Augen 13, 14 sind die
Enden 15, 16 eines bolzenartigen Bauelements 17 eines
Kraftmessers 18 gelagert. Das Bauelement 17 hat eine mittige, durchgehende Längsbohrung 21, in der ein elastisch
verformbarer, scheibenartiger Träger 22 angeordnet ist.
Im Bereich dieses Trägers 22 ist am Bauelement 17 ein
Unterlenker 23 eines nicht näher dargestellten Pflugs
gelagert.

...

Auf dem Träger 22 sind - wie in Figur 2 näher dargestellt - in Zugrichtung des Unterlenkers 23 und unter 90° zu dieser Dehnmeßstreifen 24 befestigt. Der Träger 22 liegt an der Innenwandung 25 der Längsbohrung 21 des Bauelements 17 an und ist vorteilhafterweise im Bereich des größten Biegemoments des Bauelements 17 ortsfest angeordnet. Vom Träger 22 führen Leitungen 26 nach außen zu einem nicht dargestellten Meßwertwandler einer Steuer- oder Regeleinrichtung für den Pflug.

Bei Betrieb des Ackerschleppers wirkt über den Unterlenker 23 des Pflugs eine Zugkraft auf das Bauelement 17 ein, so daß dieses durchgebogen und dadurch elastisch verformt wird. Das Bauelement 17 ist somit durch ein Biegemoment belastet, so daß es in Y-Richtung, d.h. in Richtung der Zugkraft, gestaucht und in X-Richtung gedehnt wird. Der kreisringförmige Querschnitt des Bauelements 17 wird dadurch elliptisch verformt. Der elastische Träger 22 macht in der Längsbohrung 21 des Bauelements 17 eine proportionale Verformung entsprechend der des Bauelements 17 mit. Die auf dem Träger 22 befestigten Dehnmeßstreifen 24 werden dabei gedehnt bzw. gestaucht. Dadurch wird der elektrische Widerstand in den Dehnmeßstreifen 24 geändert. Da der Träger 22 im Bereich des maximalen Biegemoments ortsfest angeordnet ist, werden jeweils die maximalen Meßwerte zur Messung verwendet und der nicht dargestellten Regelvorrichtung zugeführt. Die Empfindlichkeit der Dehnmeßstreifen 24 kann somit weitgehend ausgenutzt werden, da die maximale Verformung des Trägers 22 ausgewertet wird. Selbstverständlich kann der Träger 22 abhängig von der Bauform des Bauelements 17 auch außerhalb des maximalen Biegemoments angeordnet sein. Dabei ist zwar die Größe der Meßwerte geringer, aber ein Einbau des Trägers 22 an einer der Bauform des Bauelements 17 angepaßten Stelle ist möglich. Ferner ist es auch

...

196 0175917

möglich, daß der Träger 22 nur im Bereich der Dehnmeßstreifen 24 an der Innenwandung 25 der Längsbohrung 21
des Bauelements 17 anliegt. Dadurch kann der Träger 22
auch eine von einer Scheibe abweichende Form aufweisen.

Die notwendige Festigkeit des Bauelements 17 ist durch eine entsprechende Wandstärke erreichbar, ohne daß dabei das
Bauvolumen gegenüber einem bolzenförmigen Bauelement wesentlich vergrößert werden muß. Als Träger 22 sind herkömmlich bekannte Träger aus elastischem Material verwendbar. Da der Träger 22 geschützt im Innern des Bauelements
17 angeordnet ist, können dieser und die Dehnmeßstreifen
24 einfach und preisgünstig gestaltet sein. Die elastische Verformung des Trägers 22 ist auf das Bauelement
17 abzustimmen. Die auf die Regeleinrichtung übertragenen
Meßwerte sind dabei umso größer, je dünner der Träger 22
ist, da er exakter im Bereich des maximalen Biegemoments
anzuordnen ist.

Selbstverständlich ist es auch möglich, das Bauelement 17
nicht nur als frei aufliegender Balken, sondern auch als
einseitig oder beidseitig fest eingespanntes Bauelement
auszubilden. Ferner ist es auch denkbar, daß mehrere
Träger 22 in der Längsbohrung 21 des Bauelements 17 angeordnet sind, deren Meßwerte gemeinsam oder einzeln
ausgewertet werden.

R. 19635
14.9.1984 Sf/Pi

0175917

ROBERT BOSCH GMBH, 7000 STUTTGART 1

Ansprüche

1. Kraftmesser (18) zur Messung von mechanischen Spannungen in einem Bauteil (17), das Teil einer Steuereinrichtung eines Hubwerks von landwirtschaftlichen Arbeitsfahrzeugen ist, wobei die mechanischen Spannungen zur Ermittlung einer Meßgröße auf wenigstens ein elektrisches Widerstandselement (24), ein induktives, kapazitives oder sonstiges bekanntes Element, einwirken, das auf einem elastisch verformbaren Träger (22) angeordnet ist, und das mit einem Meßumwandler zur Erzeugung von Regelimpulsen in Verbindung steht, dadurch gekennzeichnet, daß das Bauteil (17) mindestens teilweise hohl ausgebildet ist, daß der Träger (22) im Innern (21) des Bauteils (17) angeordnet ist und daß der Träger (22) wenigstens im Bereich der Widerstandselemente (24) mit der Innenwandung (25) des Bauteils (17) in Verbindung steht.

2. Kraftmesser nach Anspruch 1, dadurch gekennzeichnet, daß der Träger (22) im Bereich des Angriffspunkts der mechanischen Spannungen ortsfest angeordnet ist.

3. Kraftmesser nach Anspruch 1 und/oder 2, dadurch gekennzeichnet, daß die elektrischen Widerstandselemente (24) in Richtung der angreifenden mechanischen Spannungen und unter 90° zueinander angeordnet sind.

. . .

4. Kraftmesser nach einem der Ansprüche 1 bis 3, dadurch gekennzeichnet, daß der Träger (22) als dünne Scheibe ausgebildet ist.

5. Kraftmesser nach einem der Ansprüche 1 bis 4, dadurch gekennzeichnet, daß die elektrischen Widerstandselemente Dehnmeßstreifen (24) sind.

6. Kraftmesser nach einem der Ansprüche 1 bis 5, dadurch gekennzeichnet, daß das Bauteil (17) rohrförmig ausgebildet ist.

7. Kraftmesser nach einem der Ansprüche 1 bis 6, dadurch gekennzeichnet, daß das Bauteil (17) als frei aufliegender Balken ausgebildet ist.

0175917

## FIG. 1

## FIG.2